# FASCICULE DE BREVET EUROPEEN

(11) **EP 3 559 790 B1**
(45) Date de publication et mention de la délivrance du brevet: **25.11.2020**
(21) Numéro de dépôt: 17825253.2
(22) Date de dépôt: 22.12.2017
(51) Int. Cl.: G06F 3/041, B60K 37/06, G06F 3/044

(54) **INTERFACE POUR VÉHICULE AUTOMOBILE ET PROCÉDÉ DE MONTAGE**
SCHNITTSTELLE FÜR EIN KRAFTFAHRZEUG UND MONTAGEVERFAHREN
INTERFACE FOR A MOTOR VEHICLE AND MOUNTING METHOD

(30) Priorité: 23.12.2016 FR 1663305
(43) Date de publication de la demande: 30.10.2019
(73) Titulaire: DAV, 94046 Créteil Cedex (FR)
(72) Inventeur: AUBRY, Anthony, 94046 Créteil Cedex (FR); WANIR, Said, 94046 Créteil Cedex (FR)
(74) Mandataire: Delplanque, Arnaud
(86) Numéro de dépôt international: PCT/EP2017/084559
(87) Numéro de publication internationale: WO 2018/115524

(56) Documents cités:
- EP-A2- 1 059 604
- EP-A2- 2 306 282
- WO-A1-2016/135425
- FR-A1- 2 459 462
- FR-A1- 2 819 586
- JP-A- 2016 120 890
- US-A- 6 026 694

## Description

La présente invention concerne une interface pour la commande d'au moins une fonction d'un organe de véhicule automobile. L'invention concerne également un procédé de montage d'une telle interface.

Dans le domaine automobile, les interfaces de commande multifonctions à surface tactile sont de plus en plus utilisées pour commander des systèmes électriques ou électroniques, tels qu'un système de climatisation, un système audio ou encore un système de navigation. De telles interfaces peuvent être associées à un écran d'affichage et permettre une navigation dans des menus déroulants.

Il existe plusieurs types de surfaces tactiles, les plus courantes étant les dalles tactiles résistives et les dalles tactiles capacitives.

Contrairement aux dalles tactiles résistives, les dalles tactiles capacitives sont constituées d'éléments configurés pour qu'elles présentent une rigidité telle qu'elles ne se déforment pas lorsque l'on appuie dessus. Cependant, les dalles tactiles capacitives ne permettent pas de détecter la force d'appui avec laquelle l'utilisateur appuie sur la surface. Cette information peut être utile dans certains cas pour mieux interpréter les commandes de l'utilisateur.

Pour permettre une détection de cette pression, certaines interfaces à surfaces tactiles capacitives, comme celle décrite dans le document WO2016135425, proposent l'ajout de capteurs capacitifs agencés à l'arrière de l'écran pour mesurer le déplacement de l'écran. Ainsi, lorsqu'un appui est exercé sur l'interface, le capteur capacitif détecte une augmentation de capacité du fait de la diminution de distance entre les électrodes. Le document JP2016120890 divulgue une interface capacitive tactile disposée sur un support mobile et connectée à un capteur de pression capacitif. Le document EP1059604 divulgue un capteur de force capacitif constitué d'une électrode fixe liée au corps de support et d'une électrode mobile liée à la partie écran tactile.

Un inconvénient de cette solution est le nombre important de composants nécessaires à sa réalisation, rendant l'interface peu compatible avec un produit réalisé de manière industrielle. De plus, l'assemblage de l'interface n'est pas particulièrement simple. En effet, certaines étapes de l'assemblage peuvent nécessiter un montage en aveugle, ce qui augmente le temps et le coût de montage.

Un autre inconvénient peut être le manque de précision obtenu par la mesure du déplacement « dite par rapprochement des électrodes », notamment pour les faibles valeurs d'effort. Cette solution présente également le désavantage de nécessiter un espace prédéfini entre électrodes en position de repos permettant la mesure d'un appui sur une gamme de mesure minimale.
Un des buts de la présente invention est donc de proposer une interface améliorée qui résolve au moins en partie au moins un des inconvénients de l'état de la technique.

A cet effet, l'invention a pour objet une interface pour la commande d'au moins une fonction d'un organe de véhicule automobile, comportant :
- une partie mobile comprenant une surface tactile capacitive,
- une partie fixe destinée à être fixée au véhicule automobile,
- au moins un élément amortisseur interposé entre la partie mobile et la partie fixe,
- au moins un capteur capacitif d'appui comprenant une électrode mobile portée par la partie mobile et une électrode fixe portée par la partie fixe, l'électrode fixe étant agencée en regard de l'électrode mobile pour mesurer une distance entre la partie mobile et la partie fixe représentative d'une force d'appui exercée sur la surface tactile capacitive,
caractérisée en ce que :
- l'électrode fixe est portée par une carte électronique de la partie fixe,
- l'électrode mobile est portée par un organe de fixation de la partie mobile traversant l'élément amortisseur et la carte électronique de sorte qu'un appui exercé sur la surface tactile capacitive éloigne l'électrode mobile de l'électrode fixe.

Cette configuration permet d'augmenter la précision de mesure des capteurs capacitifs d'appui notamment pour les faibles valeurs d'efforts.

Cette architecture permet en outre de diminuer le nombre de composants de l'interface et de simplifier son montage qui peut être réalisé interface retournée, par simple empilement de pièces.

Selon une ou plusieurs caractéristiques de l'interface, prise seule ou en combinaison :
- l'électrode mobile et l'électrode fixe sont en contact en position de repos ; on s'affranchit ainsi du besoin d'un jeu minimal de repos entre les électrodes,
- l'électrode fixe et l'électrode mobile du au moins un capteur capacitif d'appui sont au moins partiellement agencées sous l'élément amortisseur ; le capteur capacitif d'appui est ainsi disposé à l'emplacement où le déplacement de la partie mobile par rapport à la partie fixe est le plus important, dans l'axe de l'élément amortisseur, ce qui permet d'optimiser la sensibilité du capteur capacitif d'appui,
- l'électrode fixe et l'électrode mobile du au moins un capteur capacitif d'appui entourent l'organe de fixation,
- l'électrode fixe du capteur capacitif d'appui est portée par une face arrière de la carte électronique portant des circuits électriques, notamment pour la gestion de la surface tactile capacitive, en face avant ; en utilisant une seule carte électronique commune pour la gestion de la surface tactile capacitive et des capteurs capacitifs d'appui, on évite l'utilisation de cartes électroniques additionnelles, ce qui permet de diminuer le nombre de composants de l'interface, facilite son montage et abaisse les coûts,
- la partie mobile comporte un support portant au moins la surface tactile capacitive et au moins une entretoise formant une butée pour le serrage de l'organe de fixation,
- la au moins une entretoise est métallique,
- l'interface comporte au moins un conducteur flexible agencé entre l'entretoise métallique et la carte électronique pour raccorder l'entretoise métallique à des pistes électriques de la carte électronique,
- l'interface comporte en outre au moins un conducteur flexible additionnel agencé entre l'électrode mobile et la carte électronique pour raccorder l'électrode mobile à des pistes électriques de la carte électronique,
- l'une parmi l'électrode mobile ou l'électrode fixe est reliée à la masse,
- l'interface comporte quatre capteurs capacitifs d'appui et quatre éléments amortisseurs,
- l'interface comporte au moins un actionneur vibratoire configuré pour faire vibrer la partie mobile,
- la partie mobile comporte un écran d'affichage agencé à l'arrière de la surface tactile capacitive.

L'invention a aussi pour objet un procédé de montage d'une interface telle que décrite précédemment, dans lequel :
- on pose à plat une plaque frontale d'une partie mobile sur un support de montage,
- on pose un châssis pourvu d'au moins un élément amortisseur au-dessus du support en alignant un orifice axial de l'élément amortisseur dans l'axe d'un orifice du support,

- on pose une carte électronique au-dessus du châssis, en alignant le trou de la carte électronique dans l'axe de l'orifice du support, et
- on serre au moins un organe de fixation dans le support.

D'autres caractéristiques et avantages de l'invention ressortiront de la description suivante, donnée à titre d'exemple et sans caractère limitatif, en regard des dessins annexés sur lesquels :
- la figure 1 représente une vue d'une portion de l'habitacle intérieur d'un véhicule automobile comprenant une interface qui est installée à titre d'exemple au niveau du panneau avant du véhicule,
- la figure 2 montre une vue éclatée de l'interface de la figure 1,
- la figure 3 montre une vue en coupe A-A de l'interface de la figure 2,
- la figure 4 montre une vue schématique d'une partie des éléments de l'interface de la figure 3, notamment une face arrière d'une carte électronique de l'interface,
- la figure 5 est un organigramme montrant différentes étapes d'un exemple de réalisation d'un procédé de montage de l'interface,
- la figure 6 montre une vue similaire à la figure 2 pour un deuxième exemple de réalisation de l'interface,
- la figure 7 montre une vue schématique et en coupe d'un détail agrandi d'un troisième exemple de réalisation de l'interface,
- la figure 8 montre une vue similaire à la figure 7 pour un autre exemple de réalisation de l'interface, et
- la figure 9 montre une vue schématique en perspective d'une électrode mobile de l'interface de la figure 8.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

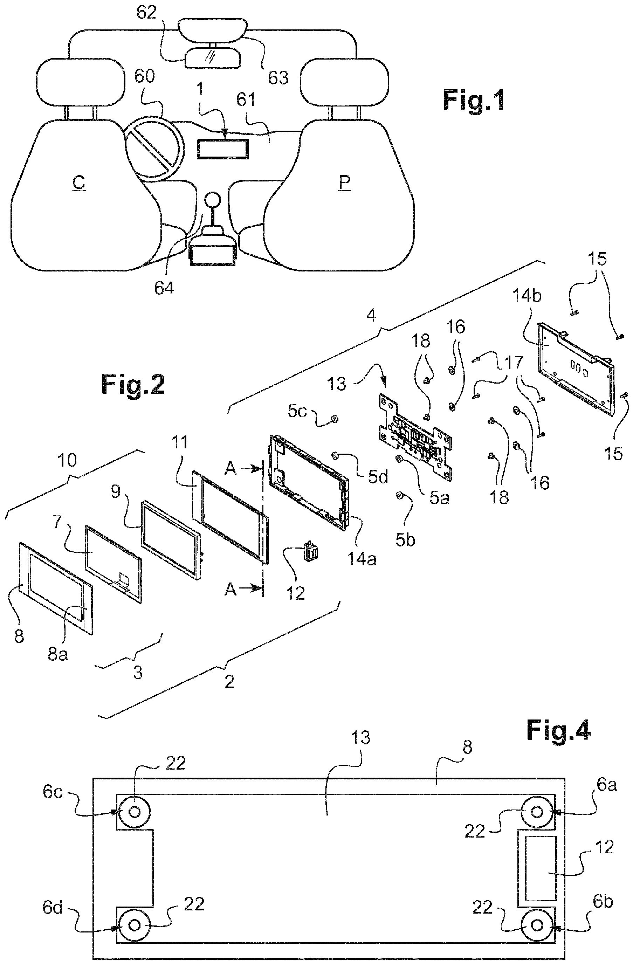

La figure 1 montre des éléments d'une partie avant d'habitacle de véhicule automobile.

L'habitacle comprend notamment un siège conducteur noté -C- disposé derrière un volant 60 et un panneau avant 61 (aussi appelé planche de bord), un siège passager noté -P-, un rétroviseur intérieur 62, un module de plafonnier 63 aussi appelé dôme placé à proximité du rétroviseur intérieur 62 dans la partie centrale haute de la partie avant de l'habitacle et une console centrale 64 située entre les deux sièges C, P de la partie avant de l'habitacle.

L'habitacle comporte en outre une interface 1 notamment propre à être logée dans le panneau avant 61 du véhicule. Bien entendu, l'interface 1 peut également être disposée à d'autres endroits de l'habitacle comme par exemple posée à l'horizontal, au niveau de la console centrale 64 ou de tout autre endroit adapté.

Une telle interface 1 permet la commande d'au moins une fonction d'un organe de véhicule automobile telle que la commande des fonctions d'un système de climatisation, d'un système audio, d'un système de téléphonie ou encore d'un système de navigation. Cette interface 1 peut également servir pour les commandes de lève-vitres, de positionnement des rétroviseurs extérieurs ou encore pour le déplacement de sièges motorisés ou pour commander des lumières intérieures, un verrouillage central, un toit ouvrant, les feux de détresse ou les lumières d'ambiance.

L'interface 1 permet par exemple à l'utilisateur une sélection par défilement dans une liste ou une modification d'une valeur de paramètre ou une validation d'une sélection. Elle permet par exemple à l'utilisateur de sélectionner une adresse postale de destination ou un nom dans un répertoire, les réglages du système de climatisation ou la sélection d'une piste musicale dans une liste.

Les figures 2, 3 et 4 montrent un exemple d'interface 1 à écran tactile.

L'interface 1 comporte une partie mobile 2 comprenant une surface tactile capacitive 3, une partie fixe 4 destinée à être fixée au véhicule automobile, au moins un élément amortisseur 5a, 5b, 5c, 5d interposé entre la partie mobile 2 et la partie fixe 4 pour relier la partie mobile 2 à la partie fixe 4 et au moins un capteur capacitif d'appui 6a, 6b, 6c, 6d configuré pour mesurer un paramètre représentatif d'une force d'appui exercée sur la surface tactile capacitive 3. Par interposé, on entend que la partie mobile 2 et la partie fixe 4 ne sont pas directement en contact, mais sont reliés seulement via un ou plusieurs éléments amortisseurs 5a, 5b, 5c, 5d.

La surface tactile capacitive 3 comprend au moins un capteur capacitif 7 et une plaque frontale 8, telle qu'une plaque de verre ou de plastique, assurant la rigidité de la surface tactile capacitive 3. La plaque frontale 8 est agencée sur le au moins un capteur capacitif 7 et fait face à l'utilisateur une fois montée dans l'habitacle. La plaque frontale 8 peut être plane ou courbe et peut être au moins partiellement transparente et/ou au moins partiellement opaque de manière à cacher les éléments disposés derrière.

Le capteur capacitif 7 permet de détecter une variation de capacité au niveau de la surface de la plaque frontale 8. Le capteur capacitif 7 peut par exemple détecter un contact ou un déplacement d'un doigt d'un utilisateur. Le capteur capacitif 7 permet également de déterminer les coordonnées spatiales du contact.

Selon un premier exemple, l'interface est de type « tableau de commande » (aussi appelé « Control Panel » en anglais). La plaque frontale 8 est opaque et la partie mobile 2 comporte une ou plusieurs capteurs capacitifs 7 agencés à distance les uns des autres, formant une ou plusieurs zones de contact, reproduisant par exemple des touches de clavier ou des curseurs (« sliders » en anglais).

Selon un deuxième exemple, l'interface est de type « pavé tactile » (aussi appelé « TouchPad » en anglais). La plaque frontale 8 est opaque et la partie mobile 2 comporte un capteur capacitif 7 de type dalle tactile capacitive, par exemple notamment apte à faire de la reconnaissance d'écriture.

Selon un troisième exemple, l'interface 1 est de type « écran tactile ». Dans ce cas, la partie mobile 2 comporte un écran d'affichage 9 agencé à l'arrière du capteur capacitif 7 de type dalle tactile capacitive, la surface tactile capacitive 3 étant au moins partiellement transparente.

Le capteur capacitif 7 est fixé à la plaque frontale 8 par exemple par une colle optique (appelée « optical bounding » en anglais). Le capteur capacitif 7 est par exemple formé d'un réseau d'électrodes s'étendant sur tout ou partie de la surface arrière de la plaque frontale 8. Les électrodes sont par exemple réalisées en ITO (oxyde indium - étain) qui permettent au capteur capacitif 7 d'être transparent.

L'écran d'affichage 9, tel qu'un écran TFT (« Thin-Film transistor » en anglais) ou un écran LED ou un écran LCD peut être configuré pour afficher des informations associées à la manipulation de l'interface 1. L'écran 9 est disposé sous le capteur capacitif 7 de manière à former un écran tactile 10. L'écran d'affichage 9 peut être fixé au capteur capacitif 7 par une colle optique. Le capteur capacitif 7, la colle optique et la plaque frontale 8 sont au moins partiellement transparents pour permettre la visualisation des images affichées par l'écran 9.

Outre l'écran tactile 10, la partie mobile 2 comporte un support 11 de la surface tactile capacitive 3, auquel est ici également fixé l'écran d'affichage 9 et contre lequel le au moins un élément amortisseur 5a, 5b, 5c, 5d vient en butée. La dimension de la plaque frontale 8 est par exemple supérieure à celle du capteur capacitif 7. Le support 11, par exemple en forme de cadre et par exemple métallique, peut ainsi être fixé à l'arrière de la plaque frontale 8, au niveau d'une surface opaque 8a laissée libre de la plaque frontale 8 autour du capteur capacitif 7.

L'interface 1 peut aussi comporter au moins un actionneur vibratoire 12 configuré pour faire vibrer la partie mobile 2 en réponse à un contact, un déplacement ou un appui exercé sur la surface tactile capacitive 3 afin de fournir un retour haptique à l'utilisateur notamment pour l'informer de la prise en compte de sa commande.

L'actionneur vibratoire 12 est par exemple de type piézoélectrique ou électromagnétique. Il repose par exemple sur une technologie similaire à celle du Haut-Parleur (en anglais : « Voice-Coil»). L'actionneur vibratoire 12 est par exemple monté « suspendu » par opposition à un montage « rattaché » dans lequel l'actionneur vibratoire 12 aurait été également solidaire de la partie fixe 4. L'interface 1 comporte par exemple un unique actionneur vibratoire 12 par exemple fixé au support 11, en périphérie de l'écran d'affichage 9. La vibration générée par l'actionneur vibratoire 12 peut être dirigée dans le plan de la surface tactile capacitive 3 ou orthogonalement au plan ou encore dirigée selon une combinaison de deux ou trois directions.

La partie fixe 4 comporte une carte électronique 13, un châssis 14a et un socle 14b dont le fond permet de refermer l'interface 1. La carte électronique 13, par exemple de type PCB en anglais pour « Printed Circuit Board », porte notamment des circuits électriques de gestion de l'écran d'affichage 9 et de la surface tactile capacitive 3. Le châssis 14b présente par exemple une forme de cadre, le châssis 14a et le socle 14b s'assemblant par exemple au moyen de vis 15, par exemple au nombre de quatre, pour supporter et maintenir la carte électronique 13 par exemple en la prenant en sandwich.

L'élément amortisseur 5a, 5b, 5c, 5d qui relie la partie mobile 2 de l'interface 1 à la partie fixe 4 comporte au moins un élément élastique, tel qu'un plot élastique, silicone ou caoutchouc travaillant en compression. L'élément élastique est par exemple d'une seule pièce et présente par exemple une forme générale sensiblement cylindrique présentant un orifice axial pour le passage d'un organe de fixation 17 de la partie mobile 2. L'interface 1 comporte par exemple quatre éléments amortisseurs 5a, 5b, 5c, 5d de type «silentblock ® ».

L'organe amortisseur 5a, 5b, 5c, 5d permet d'une part, d'amortir les vibrations de la partie mobile 2 générées par l'actionneur vibratoire 12 et d'autre part, de limiter le déplacement de la partie mobile 2 vers la partie fixe 4 lorsqu'un appui est exercé sur la surface tactile capacitive 3.

L'élément élastique présente par exemple un dégagement annulaire central permettant à l'élément élastique d'être retenu dans un orifice respectif du châssis 14a. Les orifices du châssis 14a sont par exemple disposés aux quatre coins du châssis 14a. Les éléments élastiques peuvent être insérés dans les orifices du châssis 14a par déformation ou peuvent être surmoulés dans un orifice respectif.

L'organe de fixation 17 est par exemple une vis ayant une tige surmontée d'une tête. L'extrémité de la tige est par exemple filetée pour être vissée dans le support 11 de la partie mobile 2.

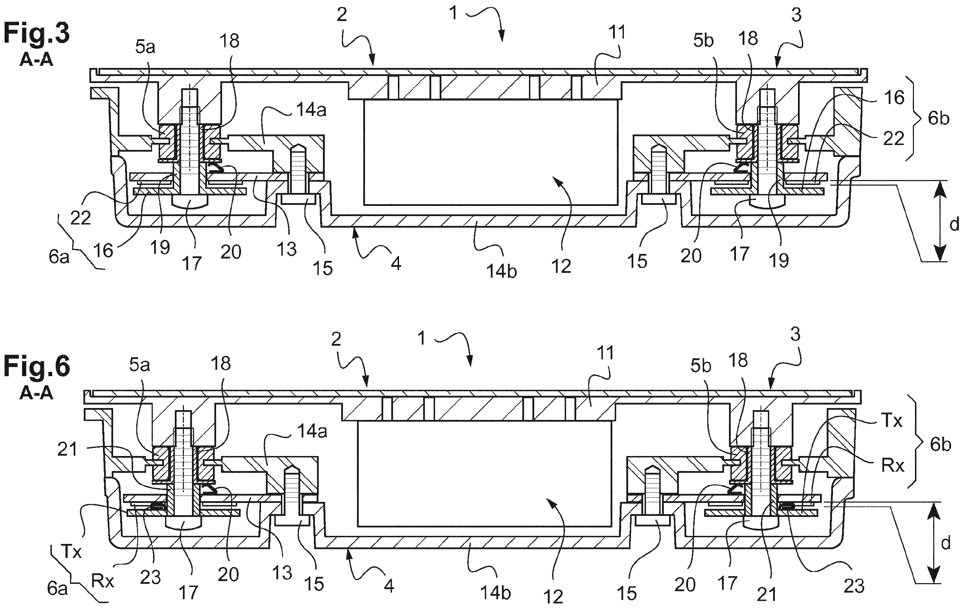

Le au moins un capteur capacitif d'appui 6a, 6b, 6c, 6d comporte une électrode mobile 16 portée par la partie mobile 2 et une électrode fixe 22 portée par la partie fixe 4, l'électrode fixe 22 étant agencée en regard de l'électrode mobile 16 pour mesurer une distance « d » entre la partie mobile 2 et la partie fixe 4 dans une direction perpendiculaire à la surface tactile capacitive 3, représentative d'une force d'appui exercée sur la surface tactile capacitive 3 (figure 3).

L'électrode fixe 22 et l'électrode mobile 16 sont des surfaces métalliques conductrices, par exemple en cuivre.

L'électrode fixe 22 est portée par la carte électronique 13 de la partie fixe 4. Elle est par exemple imprimée sur la carte électronique 13 comme les pistes électriques des circuits de la carte 13 (figure 4).

L'électrode mobile 16 est portée par l'organe de fixation 17 de la partie mobile 2 traversant l'élément amortisseur 5a, 5b, 5c, 5d et la carte électronique 13 de sorte qu'un appui exercé sur la surface tactile capacitive 3 éloigne l'électrode mobile 16 de l'électrode fixe 22.

Avec cette configuration, la distance « d » augmente quand l'effort augmente. Cette configuration permet d'augmenter la précision de mesure des capteurs capacitifs d'appui 6a, 6b, 6c, 6d notamment pour les faibles valeurs d'efforts. En effet, les capteurs capacitifs d'appui 6a, 6b, 6c, 6d sont plus précis pour les distances « d » faibles.

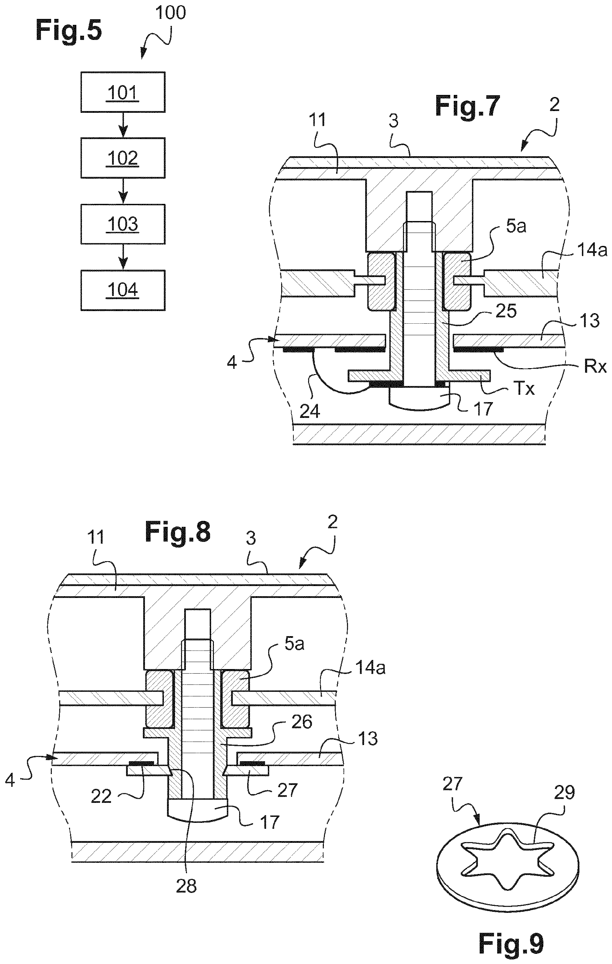

En position de repos, lorsqu'aucun appui n'est exercé sur la surface tactile capacitive 3, les électrodes mobile 16 et fixe 22 peuvent être positionnées à distance l'une de l'autre d'une distance minimale prédéterminée (comme par exemple les électrodes mobile Tx et fixe Rx sur la figure 7, montrant l'interface 1 en position de repos).

Selon un autre exemple de réalisation qui sera détaillé plus loin, l'électrode mobile 27 et l'électrode fixe 22 sont en contact en position de repos (figure 8). Ainsi, en position de repos, les électrodes 16, 22 sont en contact, l'écart apparaissant puis augmentant avec l'apparition puis l'augmentation de l'effort. On s'affranchit donc du besoin d'un jeu minimal de repos entre les électrodes 16, 22.

L'électrode fixe 22 du capteur capacitif d'appui 6a, 6b, 6c, 6d est par exemple portée par une face arrière de la carte électronique 13 portant les circuits électriques notamment pour la gestion de la surface tactile capacitive 3, en face avant (figure 4). En utilisant une seule carte électronique 13 commune pour la gestion de la surface tactile capacitive 3, de l'écran d'affichage 9 et des capteurs capacitifs d'appui 6a, 6b, 6c, 6d, on évite l'utilisation de cartes électroniques additionnelles pour les capteurs capacitifs d'appui, ce qui permet de diminuer le nombre de composants de l'interface 1, facilite son montage et abaisse les coûts.

Le fait que l'électrode fixe 22 soit portée par la carte électronique 13 de la partie fixe 4 et que l'électrode mobile 16 soit portée par l'organe de fixation 17 de la partie mobile 2 traversant l'élément amortisseur 5a, 5b, 5c, 5d et la carte électronique 13 permet que les électrodes fixe 22 et mobile 16 du au moins un capteur capacitif d'appui 6a, 6b, 6c, 6d puissent être au moins partiellement agencées sous l'élément amortisseur 5a, 5b, 5c, 5d, c'est-à-dire à l'arrière de ce dernier en considérant que l'avant est le côté de la plaque frontale 8. Le capteur capacitif d'appui 6a, 6b, 6c, 6d est ainsi disposé à l'emplacement où le déplacement de la partie mobile 2 par rapport à la partie fixe 4 est le plus important, dans l'axe de l'élément amortisseur 5a, 5b, 5c, 5d, ce qui permet d'optimiser la sensibilité du capteur capacitif d'appui 6a, 6b, 6c, 6d.

Plus précisément, l'électrode fixe 22 et l'électrode mobile 16 du au moins un capteur capacitif d'appui 6a, 6b, 6c, 6d peuvent entourer la tige de l'organe de fixation 17.

Pour cela, l'électrode fixe 22 et l'électrode mobile 16 présentent par exemple des formes annulaires, par exemple sensiblement de mêmes dimensions. L'électrode mobile 16 est par exemple une rondelle métallique, la surface du disque métallique étant agencée parallèlement et en regard de la surface de l'électrode fixe 22.

L'interface 1 comporte par exemple autant de capteurs capacitifs d'appui 6a, 6b, 6c, 6d que d'éléments amortisseurs 5a, 5b, 5c, 5d, par exemple quatre, agencés par exemple dans chaque coin de l'interface 1 de forme générale parallélépipédique (figure 4). Les capteurs capacitifs d'appui 6a, 6b, 6c, 6d et les éléments amortisseurs 5a, 5b, 5c, 5d sont par exemple agencés en périphérie de l'écran d'affichage 9 sous la surface opaque 8a de la plaque frontale 8 (figure 3), ils ne sont donc pas visibles par l'utilisateur.

La partie mobile 2 peut comporter au moins une entretoise, entourant la tige de l'organe de fixation 17, formant une butée pour le serrage de l'organe de fixation 17.

Dans ce premier exemple de réalisation, la partie mobile 2 comporte deux entretoises métalliques 18, 19 montées en série.

Une première entretoise métallique 18 cylindrique s'étend le long de l'élément amortisseur 5a, 5b, 5c, 5d. Cette première entretoise 18 permet notamment de pré-contraindre l'élément amortisseur 5a, 5b, 5c, 5d en compression pour garantir un amortissement de la partie mobile 2.

Une deuxième entretoise métallique 19 cylindrique s'étend entre la tête de l'organe de fixation 17 et la première entretoise métallique 18 le long de la tige de l'organe de fixation 17. La deuxième entretoise métallique 19 est par exemple formée d'une seule pièce avec l'électrode mobile 16.

La première entretoise métallique 18 vient en butée contre le support 11. La deuxième entretoise métallique 19 vient en butée contre la première entretoise 18. L'électrode mobile 16 vient en butée contre la tête de l'organe de fixation 17. Les entretoises 18, 19 forment ainsi une butée pour le serrage de l'organe de fixation 17 dans le support 11 au moment de l'assemblage de l'interface 1.

Comme on le verra plus loin, d'autres réalisations sont également envisageables pour la au moins une entretoise.

L'interface 1 peut comporter au moins un conducteur flexible 20 agencé entre la première entretoise métallique 18 et la carte électronique 13. Le conducteur flexible 20 raccorde électriquement l'entretoise métallique 18, et donc ici l'électrode mobile 16, à des pistes électriques de la carte électronique 13, qui sont ici raccordées à la masse électrique de la carte électronique 13. Il y a par exemple un conducteur flexible 20 pour chaque capteur capacitif d'appui 6a, 6b, 6c, 6d, donc quatre au total dans l'exemple.

Dans l'exemple illustré sur les figures 2 et 3, le conducteur flexible 20 est une lame élastique. On profite du fait que les entretoises 18, 19 soient électriquement conductrices pour interposer le conducteur flexible 20 entre les pistes électriques en face avant de la carte électronique 13 et une collerette de la première entretoise métallique 18. On peut ainsi raccorder de façon simple les parties métalliques en contact avec la première entretoise métallique 18, que sont le support 11 et l'électrode mobile 16 via la deuxième entretoise métallique 19, à la masse du véhicule.

La mesure de capacité des capteurs capacitifs d'appui 6a, 6b, 6c, 6d permettant d'accéder à la distance séparant la partie mobile 2 de la partie fixe 4 est réalisée entre l'électrode fixe 22 porté par la carte électronique 13 et l'électrode mobile 16 ici reliée à la masse. Ce mode est appelé « self capacitance» en anglais. Dans ce mode, seule l'électrode fixe 22 est excitée et la mesure est réalisée vis-à-vis de l'électrode mobile 16 reliée à la masse, sur cette même électrode fixe 22. Ce mode permet de simplifier l'architecture mécanique car la mise à la masse de l'électrode mobile 16 et du support 11 peut être réalisée simplement par les mêmes éléments : les entretoises métalliques 18, 19 et le conducteur flexible 20. De plus, une seule borne du circuit est utilisée par capteur capacitif d'appui, à la fois pour l'excitation et la mesure.

Une unité de traitement comportant un ou plusieurs microcontrôleurs ou ordinateurs ou processeurs, ayant des mémoires et programmes adaptés peut être reliée aux capteurs capacitifs d'appui 6a, 6b, 6c, 6d et à l'écran tactile 10. C'est par exemple l'ordinateur de bord du véhicule automobile.

En fonctionnement, lors d'un appui avec effort sur la plaque frontale 8, la partie mobile 2 se déplace d'une distance « d » par rapport à la partie fixe 4, éloignant l'électrode mobile 16 de l'électrode fixe 22 portée par la carte électronique 13 et comprimant partiellement l'élément amortisseur 5a, 5b, 5c, 5d.

Le capteur capacitif d'appui 6a, 6b, 6c, 6d détecte le déplacement de la partie mobile 2 vers la partie fixe 4, représentatif d'une force d'appui. La mesure de la distance « d » et la valeur calibrée de la suspension permettent d'en déduire la valeur de l'effort appliqué.

La mesure de la force d'appui peut permettre de commander au moins une fonction de l'interface 1 par exemple uniquement lorsqu'une force d'appui exercée sur l'écran tactile 3 est supérieure à un seuil. La fonction de l'interface 1 peut être commandée relativement à l'intensité de la force d'appui exercée sur l'écran tactile 3. La mesure de la force d'appui exercée sur l'écran tactile 3 peut également permettre de contrôler au moins un paramètre de la vibration générée par l'actionneur vibratoire 12, relativement à l'intensité de l'effort d'appui exercé sur l'écran tactile 3.

Cette architecture permet en plus de simplifier le montage de l'interface 1 qui peut être réalisé interface 1 retournée, par empilement de pièces, la plaque frontale 8 étant posée à plat sur un support de montage, le procédé de montage de l'interface 100 comportant les étapes suivantes (figure 5).

On assemble les éléments d'une partie mobile 2 qui comporte un support 11, par exemple un écran tactile 10 et éventuellement un actionneur vibratoire 12, l'écran tactile 10 étant obtenu par collage d'une plaque frontale 8, d'un capteur capacitif 7 et d'un écran d'affichage 9.

La plaque frontale 8 de la partie mobile 2 et posée à plat sur le support de montage (étape 101).

Le châssis 14a pourvu d'éléments amortisseurs 5a, 5b, 5c, 5d (préalablement insérés ou surmoulés dans un orifice respectif du châssis 14a) est posé au-dessus du support 11 de la partie mobile 2 retournée, en alignant un orifice axial de l'élément amortisseur 5a, 5b, 5c, 5d dans l'axe d'un orifice du support 11 (étape 102). Une mousse peut être interposée entre l'extrémité périphérique du support 11 et l'extrémité périphérique du châssis 14a pour éviter l'entrée de poussières dans l'interface 1.

On monte par exemple quatre électrodes mobiles 16 sur la face arrière de la carte électronique 13 en insérant les deuxièmes entretoises 19 dans des trous correspondants de la carte électronique 13.

Puis, on pose la carte électronique 13 pourvue d'électrodes mobiles 16, au-dessus du châssis 14a en alignant le trou de la carte électronique 13 dans l'axe de l'orifice du support 11 (étape 103).

L'alignement des trous de la carte électronique 13 et des orifices des éléments amortisseurs 5a, 5b, 5c, 5d peut être réalisé par faisceau laser ou par pré-maintien mécanique.

Puis, on serre les quatre organes de fixation 17 traversant l'élément amortisseur 5a, 5b, 5c, 5d et la carte électronique 13, dans le support 11 (étape 104). L'assemblage du sous-ensemble est terminé lorsque la tête de l'organe de fixation 17 vient en butée contre l'électrode mobile 16, la deuxième entretoise métallique 19 étant en butée contre la première entretoise métallique 18, elle-même en butée contre le support 11.

On monte alors le socle 14b sur ce sous-ensemble et on serre quatre autres vis 15 permettant d'assembler le socle 14b au châssis 14a, à travers la carte électronique 13.

L'interface 1 à surface tactile capacitive obtenue, apte à mesurer une force d'appui exercée sur la surface tactile capacitive 3, peut ainsi être réalisée de façon simple et donc de manière industrielle.

La figure 6 montre un deuxième exemple de réalisation de l'interface 1.

Cette réalisation diffère principalement de la réalisation précédemment décrite par le fait que la mesure de capacité est réalisée entre une électrode fixe Rx portée par la carte électronique 13 et une électrode mobile Tx qui n'est pas reliée à la masse. Ce mode est appelé « mutual capacitance» en anglais. Dans ce mode, l'électrode mobile Tx est excitatrice et la mesure est réalisée sur l'électrode fixe Rx. Ce mode est permet d'obtenir des mesures plus précises et une meilleure tenue CEM.

Dans ce deuxième exemple de réalisation, la partie mobile 2 comporte deux entretoises 18, 21 montées en série.

Une première entretoise métallique 18 cylindrique s'étend le long de l'élément amortisseur 5a, 5b, 5c, 5d.

Une deuxième entretoise isolante 21 cylindrique s'étend entre la tête de l'organe de fixation 17 et la première entretoise 18, le long de la tige de l'organe de fixation 17.

La première entretoise métallique 18 vient en butée contre le support 11, la deuxième entretoise isolante 21 vient en butée contre la première entretoise 18. Les entretoises 18, 21 forment ainsi une butée pour le serrage de l'organe de fixation 17 dans le support 11 au moment de l'assemblage de l'interface 1.

L'électrode mobile Tx est donc isolée de la première entretoise 18 et de l'organe de fixation 17. Selon un exemple de réalisation, la deuxième entretoise isolante 21 surmoule l'organe de fixation 17 et l'électrode mobile Tx.

L'interface 1 peut comporter au moins un conducteur flexible 20 agencé entre la première entretoise métallique 18 et la carte électronique 13 pour raccorder la première entretoise 18, et donc le support 11 métallique en contact avec la première entretoise 18, à la masse du véhicule.

L'interface 1 comporte en outre au moins un conducteur flexible additionnel 23 agencé entre l'électrode mobile Tx et la carte électronique 13 pour raccorder l'électrode mobile Tx à des pistes électriques de la carte électronique 13.

Au montage, si les électrodes mobiles Tx sont fixées à l'organe de fixation 17, celles-ci sont assemblées lorsque l'on serre les quatre organes de fixation 17 traversant l'élément amortisseur 5a, 5b, 5c, 5d et la carte électronique 13, dans le support 11 (étape 103). L'assemblage du sous-ensemble est terminé lorsque l'entretoise isolante 21 vient en butée contre la première entretoise métallique 18, elle-même en butée contre le support 11.

La figure 7 montre un troisième exemple de réalisation de l'interface 1.

Dans cet exemple, la partie mobile 2 comporte une seule entretoise 25 métallique.

L'entretoise 25 cylindrique s'étend le long de la tige de l'organe de fixation 17 entre le support 11 et la tête de l'organe de fixation 17. Elle est formée d'une seule pièce avec l'électrode mobile Tx. L'entretoise 25 en butée contre le support 11 forme ainsi une butée pour le serrage de l'organe de fixation 17 dans le support 11 au moment de l'assemblage de l'interface 1.

Dans cet exemple également, l'interface 1 comporte un conducteur flexible 24 agencé entre l'entretoise 25 métallique et la carte électronique 13 pour raccorder l'entretoise 25 à des pistes électriques de la carte électronique 13. Le conducteur flexible 24 comporte un fil électrique par exemple soudé sur une piste électrique de la carte électronique 13 d'une part et raccordé à une cosse métallique agencée entre la tête de l'organe de fixation 17 et l'électrode Tx d'autre part. Dans cet exemple, le conducteur flexible 24 raccorde électriquement l'entretoise métallique 25, et donc l'électrode mobile Tx, à la masse électrique de la carte électronique 13.

La figure 8 montre un quatrième exemple de réalisation de l'interface 1.

Dans cet exemple, l'électrode mobile 27 et l'électrode fixe 22 sont au contact en position de repos. Le contact n'est pas un contact direct entre parties métalliques. Pour éviter d'éventuels courts-circuits, l'une au moins des deux électrodes, mobile ou fixe, comporte par exemple une couche de vernis recouvrant les parties conductrices de l'électrode. L'électrode fixe 22 portée par la carte électronique 13 est par exemple recouverte du vernis, généralement coloré, de la carte électronique 13 permettant également de protéger les pistes de l'oxydation.

La partie mobile 2 comporte par exemple une seule entretoise 26 métallique, s'étendant le long de la tige de l'organe de fixation 17 entre le support 11 et la tête de l'organe de fixation 17. L'entretoise 26 en butée contre le support 11 forme ainsi une butée pour le serrage de l'organe de fixation 17 dans le support 11 au moment de l'assemblage de l'interface 1.

L'électrode mobile 27 est distincte de l'entretoise 26. C'est par exemple une rondelle métallique dont l'ouverture 29 présente une forme adaptée pour permettre son montage autour de l'entretoise 26 avec un jeu radial (figure 9).

L'ouverture 29 est par exemple ondulée radialement de manière à produire une pression dirigée vers l'organe de fixation 17.

Les flancs 28 de l'ouverture 29 peuvent en outre être inclinés par rapport à l'axe de l'organe de fixation 17, l'ouverture 29 étant plus large côté tête de l'organe de fixation 17, pour éviter à l'électrode mobile 27 de glisser le long de l'entretoise 26 une fois montée.

Au montage, après avoir posé la carte électronique 13 au-dessus du châssis 14a, on pousse la rondelle le long de l'entretoise 26 jusqu'à ce que la rondelle vienne au contact de la carte électronique 13, puis on serre l'organe de fixation 17 dans le support 11.

Ainsi, quelque soit les tolérances mécaniques du système, le jeu entre l'électrode mobile 27 et l'électrode fixe 22 est toujours nul en position de repos. Le montage est ainsi facilité et la sensibilité capacitive est ainsi augmentée, ce qui permet de diminuer les dimensions des électrodes.

## Revendications

1. Interface (1) pour la commande d'au moins une fonction d'un organe de véhicule automobile, comportant :
- une partie mobile (2) comprenant une surface tactile capacitive (3),
- une partie fixe (4) destinée à être fixée au véhicule automobile,
- au moins un élément amortisseur (5a, 5b, 5c, 5d) interposé entre la partie mobile (2) et la partie fixe (4),
- au moins un capteur capacitif d'appui (6a, 6b, 6c, 6d) comprenant une électrode mobile (16 ; Tx ; 27) portée par la partie mobile (2) et une électrode fixe (22 ; Rx) portée par la partie fixe (4), l'électrode fixe (22 ; Rx) étant agencée en regard de l'électrode mobile (16 ; Tx ; 27) pour mesurer une distance (d) entre la partie mobile (2) et la partie fixe (4) représentative d'une force d'appui exercée sur la surface tactile capacitive (3),
- l'électrode fixe (22 ; Rx) est portée par une carte électronique (13) de la partie fixe (4),
**caractérisée en ce que** :
l'électrode mobile (16 ; Tx ; 27) est portée par un organe de fixation (17) de la partie mobile (2) traversant l'élément amortisseur (5a, 5b, 5c, 5d) et la carte électronique (13) de sorte qu'un appui exercé sur la surface tactile capacitive (3) éloigne l'électrode mobile (16; Tx ; 27) de l'électrode fixe (22; Rx).

2. Interface (1) selon la revendication précédente, **caractérisée en ce que** l'électrode fixe (22 ; Rx) et l'électrode mobile (16 ; Tx ; 27) du au moins un capteur capacitif d'appui (6a, 6b, 6c, 6d) sont au moins partiellement agencées sous l'élément amortisseur (5a, 5b, 5c, 5d).

3. Interface (1) selon l'une des revendications précédentes, **caractérisée en ce que** l'électrode fixe (22 ; Rx) et l'électrode mobile (16 ; Tx ; 27) du au moins un capteur capacitif d'appui (6a, 6b, 6c, 6d) entourent l'organe de fixation (17).

4. Interface (1) selon l'une des revendications précédentes, **caractérisée en ce que** l'électrode fixe (22 ; Rx) du capteur capacitif d'appui (6a, 6b, 6c, 6d) est portée par une face arrière de la carte électronique (13) portant des circuits électriques, notamment pour la gestion de la surface tactile capacitive (3), en face avant.

5. Interface (1) selon l'une des revendications précédentes, **caractérisée en ce que** la partie mobile (2) comporte un support (11) portant au moins la surface tactile capacitive (3) et au moins une entretoise (18, 19 ; 21 ; 25 ; 26) formant une butée pour le serrage de l'organe de fixation (17).

6. Interface (1) selon la revendication précédente, **caractérisée en ce que** la au moins une entretoise (18, 19 ; 25 ; 26) est métallique.

7. Interface (1) selon la revendication précédente, **caractérisée en ce qu'**elle comporte au moins un conducteur flexible (20 ; 24) agencé entre l'entretoise (18; 25) métallique et la carte électronique (13) pour raccorder l'entretoise (18; 25) métallique à des pistes électriques de la carte électronique (13).

8. Interface (1) selon la revendication précédente, **caractérisée en ce qu'**elle comporte en outre au moins un conducteur flexible additionnel (23) agencé entre l'électrode mobile (Tx) et la carte électronique (13) pour raccorder l'électrode mobile (Tx) à des pistes électriques de la carte électronique (13).

9. Interface (1) selon l'une des revendications précédentes, **caractérisée en ce que** l'une parmi l'électrode mobile (16 ; Tx ; 27) ou l'électrode fixe (22 ; Rx) est reliée à la masse.

10. Interface (1) selon l'une des revendications précédentes, **caractérisée en ce que** l'électrode mobile (27) et l'électrode fixe (22) sont en contact indirect en position de repos.

11. Interface (1) selon l'une des revendications précédentes, **caractérisée en ce qu'**elle comporte quatre capteurs capacitifs d'appui (6a, 6b, 6c, 6d) et quatre éléments amortisseurs (5a, 5b, 5c, 5d).

12. Interface (1) selon l'une des revendications précédentes, **caractérisée en ce qu'**elle comporte au moins un actionneur vibratoire (12) configuré pour faire vibrer la partie mobile (2).

13. Interface (1) selon l'une des revendications précédentes, **caractérisée en ce que** la partie mobile (2) comporte un écran d'affichage (9) agencé à l'arrière de la surface tactile capacitive (3).

14. Procédé de montage d'une interface (100) selon l'une des revendications précédentes, dans lequel :
- on pose à plat une plaque frontale (8) d'une partie mobile (2) sur un support de montage,
- on pose un châssis (14a) pourvu d'au moins un élément amortisseur (5a, 5b, 5c, 5d) au-dessus du support (11) en alignant un orifice axial de l'élément amortisseur (5a, 5b, 5c, 5d) dans l'axe d'un orifice du support (11),
- on pose une carte électronique (13) au-dessus du châssis (14a), en alignant le trou de la carte électronique (13) dans l'axe de l'orifice du support (11), et
- on serre au moins un organe de fixation (17) dans le support (11).

## Patentansprüche

1. Schnittstelle (1) zur Steuerung zumindest einer Funktion einer Kraftfahrzeugkomponente, umfassend:
- einen beweglichen Teil (2) mit einer berührungssensitiven kapazitiven Oberfläche (3),
- einen festen Teil (4), der dazu vorgesehen ist, am Kraftfahrzeug befestigt zu sein,
- zumindest ein Dämpfungselement (5a, 5b, 5c, 5d), das zwischen dem beweglichen Teil (2) und dem festen Teil (4) angeordnet ist,
- zumindest einen kapazitiven Drucksensor (6a, 6b, 6c, 6d), der eine vom beweglichen Teil (2) getragene bewegliche Elektrode (16; Tx; 27) und eine vom festen Teil (4) getragene feste Elektrode (22; Rx) umfasst, wobei die feste Elektrode (22; Rx) gegenüber der beweglichen Elektrode (16; Tx; 27) angeordnet ist, um einen Abstand (d) zwischen dem beweglichen Teil (2) und dem festen Teil (4) zu messen, der für eine auf die berührungssensitive kapazitive Oberfläche (3) ausgeübte Druckkraft repräsentativ ist,
- wobei die feste Elektrode (22; Rx) von einer elektronischen Platine (13) des festen Teils (4) getragen wird,
**dadurch gekennzeichnet, dass**:
die bewegliche Elektrode (16; Tx; 27) von einer Befestigungskomponente (17) des beweglichen Teils (2) getragen wird, die durch das Dämpfungselement (5a, 5b, 5c, 5d) und die elektronische Platine (13) verläuft, so dass ein auf die berührungssensitive kapazitive Oberfläche (3) ausgeübter Druck die bewegliche Elektrode (16; Tx; 27) von der festen Elektrode (22; Rx) entfernt.

2. Schnittstelle (1) nach dem vorangehenden Anspruch, **dadurch gekennzeichnet, dass** die feste Elektrode (22; Rx) und die bewegliche Elektrode (16; Tx; 27) des zumindest einen kapazitiven Drucksensors (6a, 6b, 6c, 6d) zumindest teilweise unter dem Dämpfungselement (5a, 5b, 5c, 5d) angeordnet sind.

3. Schnittstelle (1) nach einem der vorangehenden Ansprüche, **dadurch gekennzeichnet, dass** die feste Elektrode (22; Rx) und die bewegliche Elektrode (16; Tx; 27) des zumindest einen kapazitiven Drucksensors (6a, 6b, 6c, 6d) die Befestigungskomponente (17) umgeben.

4. Schnittstelle (1) nach einem der vorangehenden Ansprüche, **dadurch gekennzeichnet, dass** die feste Elektrode (22; Rx) des kapazitiven Drucksensors (6a, 6b, 6c, 6d) von einer Rückseite der elektronischen Platine (13) getragen wird, die auf der Vorderseite elektrische Schaltkreise, insbesondere zur Steuerung der berührungssensitiven kapazitiven Oberfläche (3), trägt.

5. Schnittstelle (1) nach einem der vorangehenden Ansprüche, **dadurch gekennzeichnet, dass** der bewegliche Teil (2) einen Träger (11) aufweist, der zumindest die berührungssensitive kapazitive Oberfläche (3) und zumindest ein Distanzstück (18, 19; 21; 25; 26), das einen Anschlag zum Einspannen der Befestigungskomponente (17) bildet, trägt.

6. Schnittstelle (1) nach dem vorangehenden Anspruch, **dadurch gekennzeichnet, dass** das zumindest eine Distanzstück (18, 19; 25; 26) metallisch ist.

7. Schnittstelle (1) nach dem vorangehenden Anspruch, **dadurch gekennzeichnet, dass** sie zumindest einen flexiblen Leiter (20; 24) aufweist, der zwischen dem metallischen Distanzstück (18; 25) und der elektronischen Platine (13) angeordnet ist, um das metallische Distanzstück (18; 25) mit elektrischen Leiterbahnen der elektronischen Platine (13) zu verbinden.

8. Schnittstelle (1) nach dem vorangehenden Anspruch, **dadurch gekennzeichnet, dass** sie ferner zumindest einen zusätzlichen flexiblen Leiter (23) aufweist, der zwischen der beweglichen Elektrode (Tx) und der elektronischen Platine (13) angeordnet ist, um die bewegliche Elektrode (Tx) mit elektrischen Leiterbahnen der elektronischen Platine (13) zu verbinden.

9. Schnittstelle (1) nach einem der vorangehenden Ansprüche, **dadurch gekennzeichnet, dass** entweder die bewegliche Elektrode (16; Tx; 27) oder die feste Elektrode (22; Rx) mit der Erde verbunden ist.

10. Schnittstelle (1) nach einem der vorangehenden Ansprüche, **dadurch gekennzeichnet, dass** die bewegliche Elektrode (27) und die feste Elektrode (22) in der Ruheposition in indirektem Kontakt stehen.

11. Schnittstelle (1) nach einem der vorangehenden Ansprüche, **dadurch gekennzeichnet, dass** sie vier kapazitive Drucksensoren (6a, 6b, 6c, 6d) und vier Dämpfungselemente (5a, 5b, 5c, 5d) aufweist.

12. Schnittstelle (1) nach einem der vorangehenden Ansprüche, **dadurch gekennzeichnet, dass** sie zumindest einen Schwingungsaktuator (12) aufweist, der konfiguriert ist, um den beweglichen Teil (2) in Schwingung zu versetzen.

13. Schnittstelle (1) nach einem der vorangehenden Ansprüche, **dadurch gekennzeichnet, dass** der bewegliche Teil (2) einen Bildschirm (9) aufweist, der hinter der berührungssensitiven kapazitiven Oberfläche (3) angeordnet ist.

14. Verfahren zur Montage einer Schnittstelle (100) nach einem der vorangehenden Ansprüche, wobei:
- eine Frontplatte (8) eines beweglichen Teils (2) flach auf einem Montageträger angeordnet wird,
- ein Rahmen (14a), der mit mindestens einem Dämpfungselement (5a, 5b, 5c, 5d) versehen ist, über dem Träger (11) angeordnet wird, wobei eine axiale Öffnung des Dämpfungselements (5a, 5b, 5c, 5d) in der Achse einer Öffnung des Trägers (11) ausgerichtet wird,
- eine elektronische Platine (13) über dem Rahmen (14a) angeordnet wird, wobei das Loch der elektronischen Platine (13) in der Achse der Öffnung des Trägers (11) ausgerichtet wird, und
- zumindest eine Befestigungskomponente (17) im Träger (11) eingespannt wird.

## Claims

1. Interface (1) for controlling at least one function of a motor vehicle member, comprising:
- a movable portion (2) comprising a capacitive touch surface (3),
- a fixed portion (4) intended to be fixed to the motor vehicle,
- at least one damping element (5a, 5b, 5c, 5d) interposed between the movable portion (2) and the fixed portion (4),
- at least one capacitive pressure sensor (6a, 6b, 6c, 6d) comprising a movable electrode (16; Tx; 27) borne by the movable portion (2) and a fixed electrode (22; Rx) borne by the fixed portion (4), the fixed electrode (22; Rx) being arranged facing the movable electrode (16; Tx; 27) so as to measure a distance (d) between the movable portion (2) and the fixed portion (4) that is representative of a pressing force exerted on the capacitive touch surface (3),
- the fixed electrode (22; Rx) is borne by a circuit board (13) of the fixed portion (4),
**characterized in that**:
the movable electrode (16; Tx; 27) is borne by a fastening member (17) for the movable portion (2) that passes through the damping element (5a, 5b, 5c, 5d) and the circuit board (13) so that a pressure exerted on the capacitive touch surface (3) moves the movable electrode (16; Tx; 27) away from the fixed electrode (22; Rx).

2. Interface (1) according to the preceding claim, **characterized in that** the fixed electrode (22; Rx) and the movable electrode (16; Tx; 27) of the at least one capacitive pressure sensor (6a, 6b, 6c, 6d) are at least partially arranged under the damping element (5a, 5b, 5c, 5d).

3. Interface (1) according to either of the preceding claims, **characterized in that** the fixed electrode (22; Rx) and the movable electrode (16; Tx; 27) of the at least one capacitive pressure sensor (6a, 6b, 6c, 6d) surround the fastening member (17).

4. Interface (1) according to one of the preceding claims, **characterized in that** the fixed electrode (22; Rx) of the capacitive pressure sensor (6a, 6b, 6c, 6d) is borne by a rear face of the circuit board (13) which bears electrical circuits, in particular for managing the capacitive touch surface (3), on the front face.

5. Interface (1) according to one of the preceding claims, **characterized in that** the movable portion (2) comprises a support (11) that bears at least the capacitive touch surface (3) and at least one spacer (18, 19; 21; 25; 26) forming a stop for the tightening of the fastening member (17).

6. Interface (1) according to the preceding claim, **characterized in that** the at least one spacer (18, 19; 25; 26) is made of metal.

7. Interface (1) according to the preceding claim, **characterized in that** it comprises at least one flexible conductor (20; 24) arranged between the metal spacer (18; 25) and the circuit board (13) in order to connect the metal spacer (18; 25) to electrical tracks of the circuit board (13).

8. Interface (1) according to the preceding claim, **characterized in that** it further comprises at least one additional flexible conductor (23) arranged between the movable electrode (Tx) and the circuit board (13) in order to connect the movable electrode (Tx) to electrical tracks of the circuit board (13).

9. Interface (1) according to one of the preceding claims, **characterized in that** one from among the movable electrode (16; Tx; 27) and the fixed electrode (22; Rx) is connected to ground.

10. Interface (1) according to one of the preceding claims, **characterized in that** the movable electrode (27) and the fixed electrode (22) are in indirect contact in the rest position.

11. Interface (1) according to one of the preceding claims, **characterized in that** it comprises four capacitive pressure sensors (6a, 6b, 6c, 6d) and four damping elements (5a, 5b, 5c, 5d).

12. Interface (1) according to one of the preceding claims, **characterized in that** it comprises at least one vibratory actuator (12) configured to vibrate the movable portion (2).

13. Interface (1) according to one of the preceding claims, **characterized in that** the movable portion (2) comprises a display screen (9) arranged behind the capacitive touch surface (3).

14. Method for assembling an interface (100) according to one of the preceding claims, wherein:
- a front plate (8) of a movable portion (2) is placed flat on an assembly support,
- a frame (14a) provided with at least one damping element (5a, 5b, 5c, 5d) is placed on top of the support (11) with an axial hole in the damping element (5a, 5b, 5c, 5d) being aligned with the axis of a hole in the support (11),
- a circuit board (13) is placed on top of the frame (14a), the hole in the circuit board (13) being aligned with the axis of the hole in the support (11), and
- at least one fastening member (17) is fitted into the support (11).
